# EUROPEAN PATENT APPLICATION

(11) **EP 4 242 943 A1**
(43) Date of publication of application: **13.09.2023**
(21) Application number: 23158377.4
(22) Date of filing: 24.02.2023
(51) Int. Cl.: G06Q 10/0631

(54) **INFORMATION PROCESSING SYSTEM, INFORMATION PROCESSING METHOD, AND CARRIER MEANS**

(30) Priority: 11.03.2022 JP 2022038013
(71) Applicant: Ricoh Company, Ltd., Tokyo 143-8555 (JP)
(72) Inventor: SAITO, Ryo, Tokyo, 143-8555 (JP); KUSANAGI, Masato, Tokyo, 143-8555 (JP); SUZUKI, Yuuki, Tokyo, 143-8555 (JP)
(74) Representative: SSM Sandmair

(57) **Abstract**

An information processing system includes: a user meeting information acquisition unit (111, 112) configured to acquire, from a terminal device used by each of a plurality of users, user meeting information indicating a state of a corresponding one of the plurality of users in a meeting in which the plurality of users participate; a work information acquisition unit (113) configured to acquire work information related to a history of work-related activities of the plurality of users; a relationship index calculation unit (430) configured to calculate a relationship index indicating a relationship between the plurality of users and store the relationship index in a storage unit, the relationship index being calculated based on the acquired user meeting information and the acquired work information; and a presentation information generation unit (440) configured to generate, based on the relationship index that is stored, presentation information for presenting the relationship index to each of the plurality of users, and cause the terminal device to present the presentation information.

## Description

### BACKGROUND

### Technical Field

The present disclosure relates to an information processing system, an information processing method, and carrier means.

### Related Art

In good teams (organizations), members are typically said to have good relationships with one another. Recently, a human resources and organization management service, called "HRtech", has attracted attention. Also known are technologies or services focusing on relationships between members and assisting in improving communication between the members.

The concept of psychological safety has recently been attracting attention as an example of relationships between members. This concept is academically known as a "shared belief that the team is safe for interpersonal risk taking" and is identified as the most significant factor that affects team performance. Services to encourage improvement of communication to build relationships have been provided.

Japanese Unexamined Patent Application Publication No. 2020-113197 discloses a technique for assisting in communication during a meeting or conference.

However, existing technologies for assisting in communication during the meeting or conference may not improve interpersonal relations between team members.

### SUMMARY

According to an embodiment of the present disclosure, an information processing system includes a user meeting information acquisition unit, a work information acquisition unit, a relationship index calculation unit, and a presentation information generation unit. The user meeting information acquisition unit acquires, from a terminal device used by each of a plurality of users, user meeting information indicating a state of a corresponding one of the plurality of users in a meeting in which the plurality of users participate. The work information acquisition unit acquires work information related to a history of work-related activities of the plurality of users. The relationship index calculation unit calculates a relationship index indicating a relationship between the plurality of users, based on the acquired user meeting information and the acquired work information, and stores the relationship index in a storage unit. The presentation information generation unit generates, based on the relationship index stored in the storage unit, presentation information for presenting the relationship index to each of the plurality of users, and cause the terminal device to present the presentation information.

According to another embodiment of the present disclosure, an information processing method includes: acquiring, from a terminal device used by each of a plurality of users, user meeting information indicating a state of a corresponding one of the plurality of users in a meeting in which the plurality of users participate; acquiring work information related to a history of work-related activities of the plurality of users; calculating a relationship index indicating a relationship between the plurality of users, based on the acquired user meeting information and the acquired work information; storing the relationship index in a storage unit; generating, based on the relationship index stored in the storage unit, presentation information for presenting the relationship index to each of the plurality of users; and causing the terminal device to present the presentation information.

According to another embodiment of the present disclosure, carrier means carries computer readable code for controlling a computer system to carry out the information processing method.

At least one or more embodiments provide an information processing system for assisting in improving interpersonal relations between a plurality of persons.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example configuration of a relationship improvement support system according to a first embodiment;
FIG. 2 is a diagram illustrating an example hardware configuration of an information processing server according to the first embodiment;
FIG. 3 is a diagram illustrating an example functional configuration of a terminal according to the first embodiment;
FIG. 4 is a diagram illustrating an example functional configuration of the information processing server according to the first embodiment;
FIG. 5 is an illustration of a first example of presentation information according to the first embodiment;
FIG. 6 is an illustration of a second example of presentation information according to the first embodiment;
FIG. 7 is a flowchart illustrating an example of an operation procedure executed for each meeting by the relationship improvement support system according to the first embodiment;
FIG. 8 is a flowchart illustrating an example process for presenting presentation information according to the first embodiment;
FIG. 9 is a diagram illustrating an example of output information indicating that an improvement plan is not being implemented according to a second embodiment;
FIG. 10 is a diagram illustrating an example configuration of a relationship improvement support system according to a third embodiment; and
FIG. 11 is an illustration of an example of presentation information according to the third embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

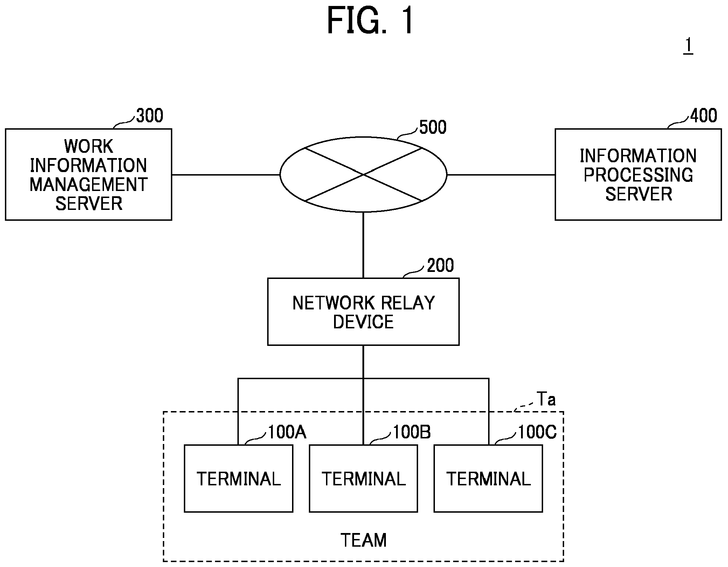

Embodiments of the present disclosure will be described hereinafter with reference to the drawings. FIG. 1 is a diagram illustrating an example configuration of a relationship improvement support system 1 according to a first embodiment. The numbers of devices illustrated in FIG. 1 are an example. A meeting, which will be described hereinafter, may or may not be online. In other words, the term "meeting", as used herein, may be a face-to-face meeting conducted at a specific place or a meeting conducted online, such as a web meeting. In this embodiment, in an example, a team Ta is an organization that three members (hereinafter referred to as "users") belong to (or join).

Referring to FIG. 1, the relationship improvement support system 1 includes a plurality of terminals 100, a network relay device 200, a work information management server 300, and an information processing server 400. In FIG. 1, in an example, the relationship improvement support system 1 includes three terminals 100A, 100B, and 100C. The terminals 100 are connected to a network 500 via the network relay device 200, such as a local area network (LAN) relay device or an Internet relay device. The network relay device 200 is a router, for example.

The work information management server 300 includes one or more computers that record and manage work information of each user. The work information of each user is information related to the attribute of the user or the daily tasks of the user. Examples of the work information of each user include information indicating the gender, age, team the user belongs to, job title, work experience, work responsibilities, work time (work hours), and history of work activities (e.g., sending and responding to emails or chats, meetings, creating work schedules, and other work tasks), information indicating performance, and work-related event information. The history of sending and responding to emails or chats is information from which the sender and receiver addresses, transmission date and time, and so on of each email or chat in the past can be determined. The history of sending and responding to each email or chat may include other parts such as the title and body of the email or chat. The history of meetings is information from which the date and time when each meeting was conducted in the past, participant members, and so on can be determined. The work information may include any information that can identify the underlying relationships between users, which are formed through daily interactions, not relationships between users during the meetings.

The terminals 100 are used by respective users during a meeting conducted by the team Ta, and examples of the terminals 100 include personal computers (PCs) and smart terminals. The terminals 100 receive, for each meeting conducted by the team Ta, input image information or voice information of the users via cameras, microphones, or the like included in (or connected to) the terminals 100 during the meeting and record the input information. The terminals 100 may be connected to sensors capable of measuring physiological information of the users. In this case, the terminals 100 also record the physiological information measured by the sensors. In a web meeting, the terminals 100 are, for example, terminals used for the web meeting. In a face-to-face meeting, the terminals 100 are, for example, terminals connected to cameras, microphones, or the like placed near (e.g., in front of) the users. Each of the terminals 100 calculates a set of feature values (feature value group) for information recorded during a meeting and work information managed for the user of the terminal 100 by the work information management server 300. The information recorded during a meeting is hereinafter referred to as "user meeting information". Information including user meeting information and work information of a certain user is hereinafter referred to as "user information". The terminal 100 transmits the calculated feature value group to the information processing server 400. The terminals 100 calculate feature value groups corresponding to the terminals 100. Thus, the feature value groups transmitted from the terminals 100 to the information processing server 400 have different values.

The information processing server 400 includes one or more computers that receive the feature value groups from the terminals 100 via the network 500 and calculate a relationship index between the members (in this embodiment, three members) of the team Ta, based on the feature value groups of the members of the team Ta. The relationship index may have one or more values. The information processing server 400 calculates one relationship index (or a set of relationship indices) for the team Ta on a per-meeting basis. That is, the relationship index of the team Ta is calculated for each meeting. A set of relationship indices may include relationship indices that are calculated for each plurality of time-series segments of one meeting and that are chronologically arranged.

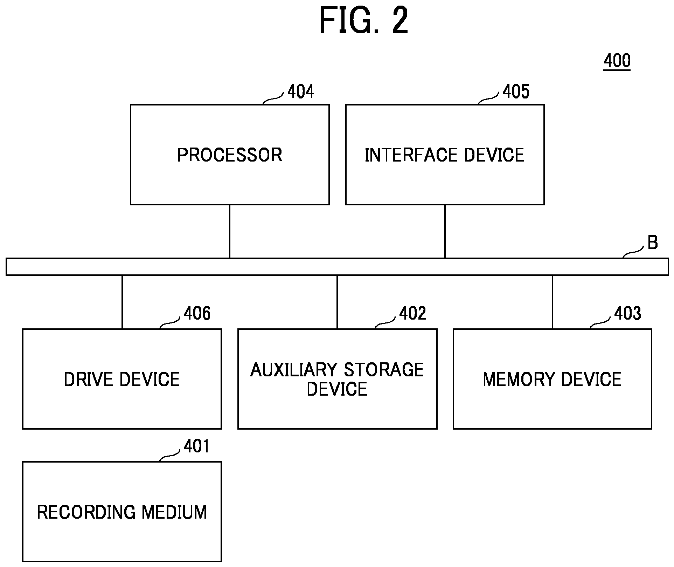

FIG. 2 is a diagram illustrating an example hardware configuration of the information processing server 400 according to the first embodiment. The information processing server 400 illustrated in FIG. 2 includes a drive device 406, an auxiliary storage device 402, a memory device 403, a processor 404, and an interface device 405, which are interconnected by a bus B.

A program that implements processing performed by the information processing server 400 is provided via a recording medium 101 such as a compact disc read-only memory (CD-ROM). In response to the recording medium 101, which stores the program, being set in the drive device 406, the program is installed into the auxiliary storage device 402 from the recording medium 101 through the drive device 406. In an example, the program is not installed from the recording medium 101, and is downloaded from another computer via a network. The auxiliary storage device 402 stores the installed program and also stores desired files, data, and so on.

In response to receipt of an instruction to activate the program, the memory device 403 reads the program from the auxiliary storage device 402 and stores the read program. The processor 404 includes a central processing unit (CPU) or a graphics processing unit (GPU), or includes a CPU and a GPU. The processor 404 implements the functions of the information processing server 400 in accordance with the program stored in the memory device 403. The interface device 405 is used as an interface for connecting to a network.

### Example Functional Configuration of Terminal 100

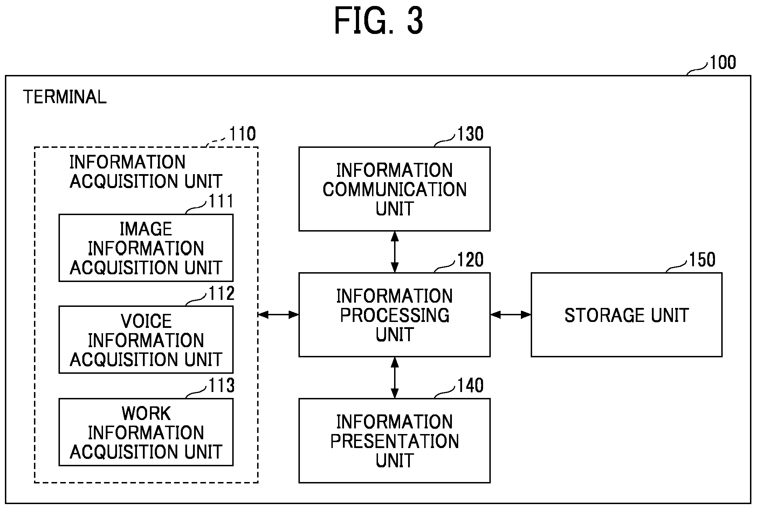

FIG. 3 is a diagram illustrating an example functional configuration of each of the terminals 100 according to the first embodiment. In FIG. 3, the terminal 100 includes an information acquisition unit 110, an information processing unit 120, an information communication unit 130, and an information presentation unit 140. Each unit is implemented by processing performed by a CPU of the terminal 100 in accordance with one or more programs installed in the terminal 100. The terminal 100 also includes a storage unit 150. For example, the storage unit 150 is implemented using the auxiliary storage device 402 of the information processing server 400 or a storage device or the like connectable to the terminal 100 via a network.

### Information Acquisition Unit 110

The information acquisition unit 110 acquires user information and records (stores) the acquired user information in the storage unit 150. The information acquisition unit 110 includes an image information acquisition unit 111, a voice information acquisition unit 112, and a work information acquisition unit 113. The image information acquisition unit 111 and the voice information acquisition unit 112 acquire user meeting information of different modalities.

The image information acquisition unit 111 acquires, as a portion of the user meeting information, image information indicating a facial expression of the user during a meeting or image information (still image information or moving image information) of the upper body portion of the user. In an example, the image information acquisition unit 111 acquires image information from a camera mounted on the terminal 100. The camera mounted on the terminal 100 is an example. In another example, a plurality of cameras externally connected to the terminal 100 may be used. The image information acquisition unit 111 may be configured to acquire image information from which special facial expression information such as a micro-facial expression called a micro-expression can be extracted. The image information acquisition unit 111 associates a time stamp indicating the timing (time) at which the image information is acquired with the image information.

The voice information acquisition unit 112 acquires, as a portion of the user meeting information, voice information indicating a voice spoken by the user during the meeting. In an example, the voice information acquisition unit 112 acquires voice information from a microphone mounted on the terminal 100. The microphone mounted on the terminal 100 is an example. In another example, a headset connected to the terminal 100, an external microphone having directivity and/or a noise canceling function, or the like may be used. The voice information acquisition unit 112 associates a time stamp indicating the timing (time) at which the voice information is acquired with the voice information.

The work information acquisition unit 113 acquires the work information of the user of the terminal 100 from the work information management server 300 via the network 500 to which the information communication unit 130 is connected.

The information acquisition unit 110 may include a physiological information acquisition unit that acquires physiological information of the user during a meeting. In this disclosure, the physiological information is any information that can be acquired from a physical body of the user, but other than the image information of the user and the voice of the user. Examples of the physiological information include brain waves, respiration, body temperature, blinks, and heart rate. The physiological information acquisition unit may include a non-contact sensor using a camera or the like, a contact sensor to be brought into contact with the body of the user, and the like. These sensors may be connected to the terminal 100 via a line using Bluetooth^{®} or the like. The physiological information acquisition unit associates a time stamp indicating the timing (time) at which the physiological information is acquired with the physiological information.

### Information Processing Unit 120

The information processing unit 120 performs an information modification process and mediates exchange of information between other function units of the terminal 100. Specifically, the information processing unit 120 calculates a set of feature values (feature value group) for calculating a relationship index, based on the user information acquired by the information acquisition unit 110 and stored in the storage unit 150. The information processing unit 120 stores the calculated feature value group in the storage unit 150. The term "feature value" refers to information indicating a feature of the user information. As described above, the user information includes the user meeting information (image information and voice information) and the work information. The user meeting information may further include physiological information of the user during the meeting. Known examples of the feature value contributing to relationships include various feature values such as a change in the emotion of the user, an action during a conversation, and a phenomenon called synchronization, which is temporal coordination between users in terms of action, emotion, physiological indicator, and so on. A set of feature values calculated from the user information by the information processing unit 120 to calculate a relationship index is hereinafter referred to as a "user feature-value group". A user feature-value group calculated by the information processing unit 120 of each of the terminals 100 is a set of feature values of the user information related to one user corresponding to the terminal 100.

A method for calculating a user feature-value group based on user information will be described. Immediately before converting user information into feature values, the information processing unit 120 performs a data cleansing process such as a noise removal process for removing noise.

The information processing unit 120 determines, from the image information acquired by the image information acquisition unit 111, a history of movements of facial muscles deeply involved in facial expressions, called action units, by performing image processing and converts the history into a feature value. The information processing unit 120 may calculate, from the calculated action units, emotional intensity time-series information of six basic emotions (anger, disgust, fear, happiness, sadness, and surprise) plus neutral expression and use the emotional intensity time-series information as a feature value. The information processing unit 120 may further calculate the number of emotional changes, the time ratio of emotional changes, and the degree of matching of emotion between the users from the emotional intensity time-series information and set the calculation results (such as the number of emotional changes, the time ratio of emotional changes, and the degree of matching of emotion between the users) as feature values.

The information processing unit 120 calculates, from the voice information acquired by the voice information acquisition unit 112, prosodic feature values (such as tempo, pitch, and energy) specific to the voice of the user and feature values related to a conversation between a plurality of users (such as the number of utterances, a speech ratio, the number of turn-taking events, and an overlap time) by performing voice signal processing.

The information processing unit 120 acquires feature values of the user from the work information acquired by the work information acquisition unit 113. Examples of the feature values include the gender, age, team the user belongs to, job title, work experience, work responsibilities, work time, and a history of sending and responding to emails or chats. The information processing unit 120 may acquire, as a feature value, information obtained by modifying the work information. Examples of such information include the degree of communication activity and the size of a communication network.

In a case where the information acquisition unit 110 acquires the physiological information of the user, the information processing unit 120 may calculate, from the physiological information, information indicating a change in stress or tension over time as a feature value.

The data cleansing process or the feature value conversion process performed by the information processing unit 120 is not limited to the method described above, and a known technique may be used. In an example, the function of calculating a user feature-value group from the user information may be implemented by an information processing unit 420 of the information processing server 400. In this example, the information communication unit 130 of each of the terminals 100 transmits the user information acquired by the information acquisition unit 110 of the terminal 100 to the information processing server 400. In another example, the information processing server 400 may acquire the work information in the user information from the work information management server 300. In this example, the information communication unit 130 of each of the terminals 100 transmits the user meeting information acquired by the information acquisition unit 110 of the terminal 100 to the information processing server 400.

### Information Communication Unit 130

The information communication unit 130 performs information communication with the work information management server 300 and the information processing server 400 via the network relay device 200 and the network 500. In information communication with the work information management server 300, for example, the information communication unit 130 transmits a request for work information of the user corresponding to the terminal 100 and receives the work information of the user. In information communication with the information processing server 400, for example, the information communication unit 130 transmits a user feature-value group calculated by the information processing unit 120 and stored in the storage unit 150, and receives presentation information generated by the information processing server 400.

### Information Presentation Unit 140

In an example, the information presentation unit 140 receives (acquires) presentation information from the information processing server 400 via the information communication unit 130 in response to an operation by the user of the terminal 100, and presents the presentation information. The term "presentation information" refers to information for presenting the relationship index calculated by the information processing server 400 to the user. For example, the user enters identification information (hereinafter referred to as a "meeting ID") of a meeting conducted in the past into the terminal 100 to view the presentation information of the meeting. Examples of the method for presenting the presentation information include, but are not limited to, a method of outputting the presentation information from a monitor (display device) or a projector of the terminal 100 as visual information, a method of outputting the presentation information from a speaker of the terminal 100 or the like as voice information, and a method of outputting the presentation information from a wearable device or the like worn by the user as vibration information. The presentation information is presented to, for example, but not limited to, the user of the terminal 100, a person who uses a terminal other than the terminal 100, such as a member of the team Ta to which the user belongs or a person who is not included in the team Ta.

### Storage Unit 150

For example, the storage unit 150 temporarily stores the user information acquired by the information acquisition unit 110, the user feature-value group calculated by the information processing unit 120, and the presentation information received from the information processing server 400.

### Work Information Management Server 300

The work information management server 300 will be described. The work information management server 300 collects work information for each user or each team, and stores and manages the collected work information in association with the ID of the user or the team. The work information collected for each user is associated with the ID of the user (hereinafter referred to as a "user ID"). The work information collected for each team (e.g., information on an event related to the team) is associated with the ID of the team (hereinafter referred to as a "team ID"). The work information management server 300 also stores information indicating to which team each user belongs. In other words, the work information management server 300 also stores information on the correspondence between a user ID and a team ID. Accordingly, the work information management server 300 can generate work information of a certain user such that the work information includes work information of a team to which the user belongs. In response to receipt of a request including a user ID, a type of work information, and the like via the network 500, the work information management server 300 transmits the work information designated in the request to the source of the request.

### Example Functional Configuration of Information Processing Server 400

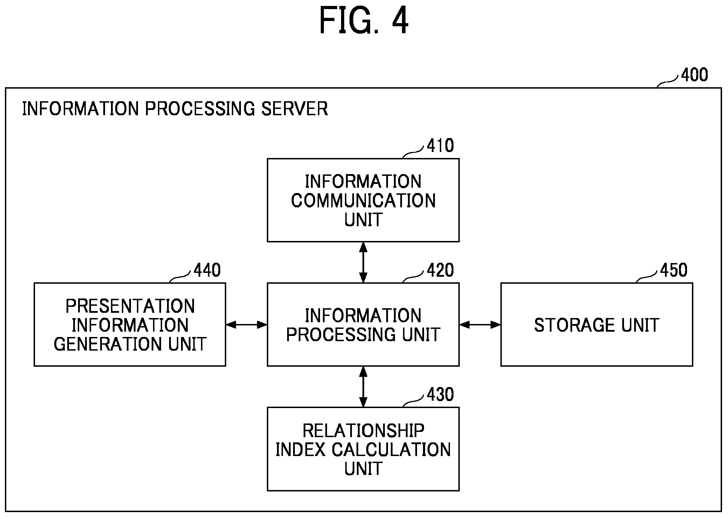

FIG. 4 is a diagram illustrating an example functional configuration of the information processing server 400 according to the first embodiment. In FIG. 4, the information processing server 400 includes an information communication unit 410, an information processing unit 420, a relationship index calculation unit 430, and a presentation information generation unit 440. Each unit is implemented by processing performed by the processor 404 in accordance with one or more programs installed in the information processing server 400. The information processing server 400 also includes a storage unit 450. For example, the storage unit 450 is implemented using the auxiliary storage device 402 or a storage device or the like connectable to the information processing server 400 via a network.

### Information Communication Unit 410

The information communication unit 410 performs information communication with the terminals 100 and the work information management server 300 via the network 500. In information communication with the terminals 100, for example, the information communication unit 410 receives, from each of the terminals 100, a meeting ID and a user feature-value group calculated by the information processing unit 120 of the terminal 100, and stores the received user feature-value group in the storage unit 450 in association with the received meeting ID. Further, the information communication unit 410 transmits presentation information generated by the presentation information generation unit 440 to the terminals 100. In information communication with the work information management server 300, for example, the information communication unit 410 transmits a request for work information of each user or the team Ta and receives the work information of the user or the team Ta.

### Information Processing Unit 420

The information processing unit 420 performs an information modification process and mediates exchange of information between other function units of the information processing server 400. In an example, the information processing unit 420 may calculate a user feature-value group for the user information of each user.

### Relationship Index Calculation Unit 430

The relationship index calculation unit 430 calculates a relationship index of the team Ta from the user feature-value groups of the users. The term "relationship index" refers to an evaluation value obtained by evaluation of interpersonal relations within the team Ta from one aspect, a set of evaluation values obtained by evaluation of interpersonal relations within the team Ta from two or more aspects, or a value or a set of values derived by applying a rule (e.g., a weighted average operation) to evaluation values obtained by evaluation of interpersonal relations within the team Ta from two or more aspects. Various concepts are known as relationship indices in the academic field. Such relationship indices may be, for example, psychological safety described in Edmondson, A. "Psychological safety and learning behavior in work teams." Administrative Science Quarterly, volume 44, no. 2, 1999, pp. 350-383, cohesion disclosed in Japanese Patent No. 5691073, and engagement score. Other relationship indices may include "ease of speaking up". In ISHII, Ryosuke, Shinriteki anzensei no tsukurikata (How to Create Psychological Safety), 2020, JMA Management Center Inc., Tokyo, psychological safety can be divided into a plurality of elements, and one of the elements of psychological safety is "ease of speaking up".

The relationship index calculation unit 430 may calculate the relationship index by using a method based on machine learning. A preliminary study is conducted to collect sets of user feature-value groups of a plurality of persons and a relationship index of the plurality of persons to create training data. A learning model such as a linear regression model, a decision tree, a random forest, a support vector machine, or a neural network is trained using the training data to build a prediction model for predicting a relationship index from the user feature-value groups of the plurality of persons. The relationship index calculation unit 430 uses the built prediction model to calculate a relationship index of the team Ta from the user feature-value groups of the users. In an example, the derivation of the relationship index based on the preliminary study is performed using a questionnaire. The preliminary study may be conducted when the relationship improvement support system 1 is constructed, or may be conducted on users when the relationship improvement support system 1 is provided to the users. Alternatively, after the operation of the relationship improvement support system 1 is started, the study may be conducted on the users periodically or non-periodically to create training data, and the learning model may be updated using the created training data. The learning model may be a model obtained by fusing a plurality of learning models using an ensemble method, or any other known model.

In an example, when calculating the relationship index, the relationship index calculation unit 430 may calculate, for each feature value of the user feature-value group, feature value influence information indicating the degree of influence of the feature value on the calculation result. In an example, the feature value influence information is calculated using the technique disclosed in Lundberg, Scott, Su-In Lee, "A Unified Approach to Interpreting Model Predictions", Proceedings of the 31st Conference on Neural Information Processing Systems, 2017, pp. 4768 to 4777.

In an example, the relationship index calculation unit 430 may calculate a relationship index corresponding to an entire meeting. In another example, the relationship index calculation unit 430 may divide one meeting into a plurality of segments, calculate a relationship index for each of the plurality of segments, and arrange the plurality of calculated relationship indices in chronological order of the segments to generate time-series information.

### Storage Unit 450

For example, the storage unit 450 temporarily stores information transmitted from the network 500 or presentation information generated by the presentation information generation unit 440 described below.

The storage unit 450 further stores relationship indices calculated by the relationship index calculation unit 430 over a certain period of time from the present to the past.

### Presentation Information Generation Unit 440

The presentation information generation unit 440 generates presentation information to be presented by the information presentation units 140 of the terminals 100, based on the relationship index calculated by the relationship index calculation unit 430. The function of the presentation information generation unit 440 may be implemented by the information presentation units 140 of the terminals 100.

In an example, the presentation information generation unit 440 may generate, as presentation information, information representing the relationship index as a numerical value or a character string (e.g., "high" or "low") corresponding to the magnitude of the relationship index.

In another example, the presentation information generation unit 440 may generate, as presentation information, a graphical representation of relationship indices calculated by the relationship index calculation unit 430 over a certain period of time from the present to the past and stored in the storage unit 450, or information in which a change point for the relationship indices is highlighted. In this example, the presentation information generation unit 440 may generate, as presentation information, a graph also depicting information (e.g., a horizontal line) indicating the position of a certain characteristic value (e.g., an average value of relationship indices of other teams).

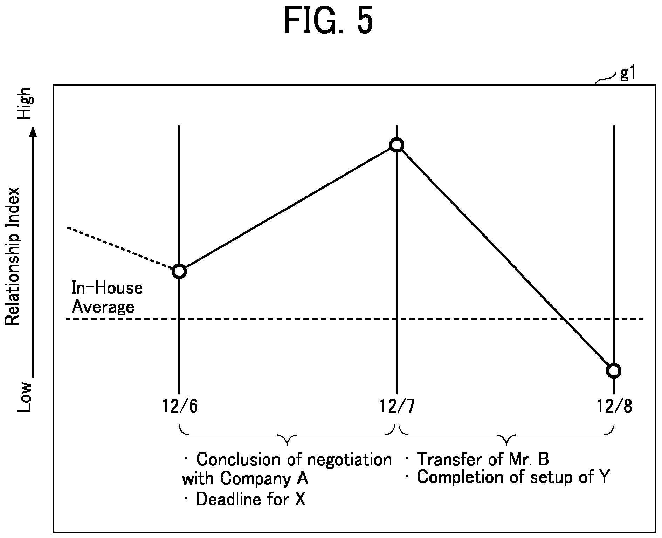

In another example, as illustrated in FIG. 5, the presentation information generation unit 440 may add information indicating the times at which events indicated by the work-related event information obtained from the work information management server 300 took place to a graphical representation of relationship indices calculated by the relationship index calculation unit 430 over a certain period of time from the present to the past and stored in the storage unit 450 to generate information as presentation information. In a graph g1 illustrated in FIG. 5, the horizontal axis represents time (date), and the vertical axis represents the relationship index. In FIG. 5, relationship indices for meetings conducted by the team Ta on Dec. 6 (12/6), Dec. 7 (12/7), and Dec. 8 (12/8) are plotted on the graph g1. Further, event information related to the team Ta from Dec. 6 (12/6) to Dec. 7 (12/7) ("Conclusion of negotiation with Company A" and "Deadline for X") and event information related to the team Ta from Dec. 7 (12/7) to Dec. 8 (12/8) ("Transfer of Mr. B" and "Completion of setup of Y") are plotted on the time axis (horizontal axis) of the graph g1. The presentation information illustrated in FIG. 5 helps understand the transition of the relationship indices and understand the relationship between the events and the relationship indices. As a result, a person who views the presentation information (hereinafter simply referred to as a "viewer") can infer a causal relationship between the work-related events and the change of the relationship indices (the cause of the change of the relationship indices).

In another example, the presentation information generation unit 440 may add the feature value influence information to the presentation information. For example, the relationship index is highly evaluated when the "high rate of utterances" has relatively large influence. That is, in the case where the influence of the rate of utterances is large, compared to influences of other features in consideration, the presentation information generation unit 440 adds a character string such as "the relationship index is highly evaluated for the following reason: the high rate of utterances" to the presentation information such that the character string is displayed. The display of such a character string enables the viewer to infer the relationship between the states of the members in the meeting and the relationship index.

In another example, the relationship index calculation unit 430 outputs relationship indices for one meeting as time-series information. In this case, the presentation information generation unit 440 may generate, as presentation information, a portion of the user meeting information corresponding to a time (segment) associated with a relationship index having a characteristic value (e.g., a maximum value or a minimum value). This enables the viewer to check the states of the members at the time (segment) associated with the characteristic relationship index and infer the relationship between the states of the members in the meeting and the relationship index. In a case where a portion of the user meeting information is included in the presentation information, the information communication units 130 of the terminals 100 transmit not only the user feature-value groups but also the user meeting information to the information processing server 400 together with the meeting ID and the user feature-value groups, and the information processing server 400 stores the user meeting information in the storage unit 450 in association with the meeting ID. Accordingly, the presentation information generation unit 440 can use the user meeting information for each meeting.

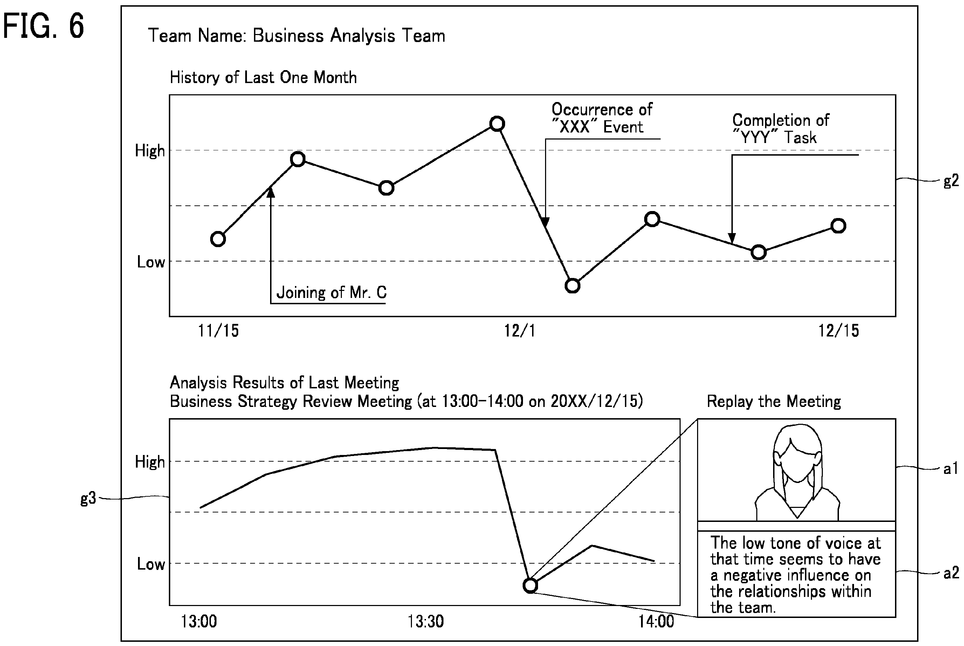

In another example, as illustrated in FIG. 6, the presentation information generation unit 440 may integrate some or all of the various kinds of presentation information described above and information such as the user names and the name of the team Ta to generate information as presentation information. In the presentation information illustrated in FIG. 6, a graph g2 indicates a relationship index for each meeting in association with event information, as in the graph g1 illustrated in FIG. 5. A graph g3 indicates a relationship index for each of a plurality of segments into which one meeting (the previous meeting) is divided. The relationship index for each segment can also be acquired from the storage unit 450. An area a1 displays image information of user meeting information corresponding to a time (segment) associated with a relationship index having a characteristic value (in FIG. 6, the minimum value). The viewer may select a user for whom the image information is to be displayed. An area a2 includes a character string based on the feature value influence information for the relationship index having the characteristic value (in FIG. 6, the minimum value).

### Operation Procedure

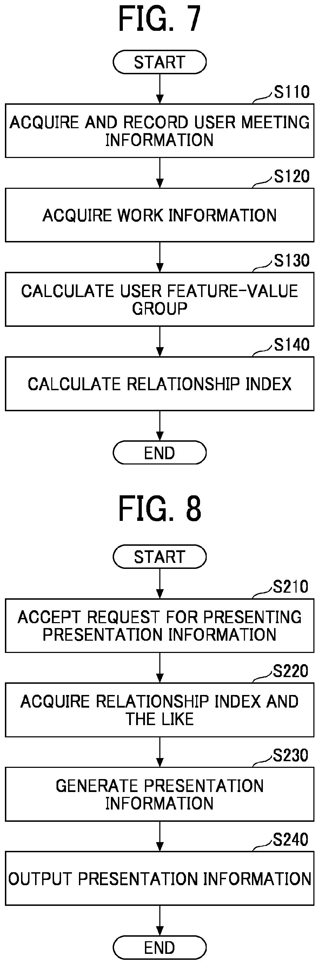

FIG. 7 is a flowchart illustrating an example of an operation procedure executed for each meeting by the relationship improvement support system 1 according to the first embodiment.

In step S110, the information acquisition unit 110 of the terminal 100 of each user participating in a certain meeting (hereinafter referred to as a "target meeting") acquires and records user meeting information related to the user of the terminal 100 in the period from the start to the end of the target meeting.

The work information acquisition unit 113 of the terminal 100 of each user participating in the target meeting acquires work information of the user of the terminal 100 from the work information management server 300 at any time during the target meeting or at the end of the target meeting (S120).

After step S120, the information processing unit 120 of the terminal 100 of each user participating in the target meeting calculates a user feature-value group of the user of the terminal 100, based on user information including the user meeting information recorded in step S110 and the work information acquired in step S120 (S130). The information communication unit 130 of the terminal 100 of each user participating in the target meeting transmits the calculated user feature-value group and the meeting ID of the target meeting to the information processing server 400 via the network 500. In an example, the information communication unit 130 may also transmit the user meeting information or the user information to the information processing server 400.

In response to receipt of the user feature-value groups and the like (i.e., the user feature-value groups of the users in the team Ta, and the user meeting information or the user information) and the meeting ID from the terminals 100, the information communication unit 410 of the information processing server 400 stores the received information in the storage unit 450 in association with the meeting ID. Subsequently, the relationship index calculation unit 430 calculates one relationship index (or a set of relationship indices), based on the user feature-value groups of the users sharing the meeting ID (S 140). The relationship index calculation unit 430 stores the calculated relationship index (or relationship indices) in the storage unit 450 in association with the meeting ID. In an example, the relationship index calculation unit 430 may calculate feature value influence information for each feature value. In this example, the relationship index calculation unit 430 also stores the calculated feature value influence information in the storage unit 450 in association with the meeting ID.

The processing of step S140 is not necessarily performed in synchronization with the timing at which the meeting is conducted.

FIG. 8 is a flowchart illustrating an example process for presenting presentation information according to the first embodiment.

In step S210, the information presentation unit 140 of a certain terminal 100 (hereinafter referred to as a "target terminal 100") accepts a request for presenting presentation information. At this time, information for identifying a meeting for which the presentation information is to be presented is designated. This information is hereinafter referred to as "meeting identification information". In one example, one or more meeting IDs may be designated. In another example, a team ID and a period of time may be designated. In a case where a team ID and a period of time are designated, presentation information for one or more meetings related to the team ID and conducted over the period of time is to be presented. The information communication unit 130 of the target terminal 100 transmits a presentation-information generation request including the information designated in the request for presenting the presentation information to the information processing server 400. The processing of step S210 may be performed at any time. In other words, the viewer can view the presentation information at any time.

In response to the information communication unit 410 of the information processing server 400 receiving the presentation-information generation request, the presentation information generation unit 440 acquires, from the storage unit 450, a relationship index and the like for each meeting corresponding to the meeting identification information designated in the presentation-information generation request (S220). At this time, the presentation information generation unit 440 acquires the feature value influence information associated with the meeting ID of each meeting corresponding to the meeting identification information and the user meeting information of the participants from the storage unit 450, or acquires the work information of the participants from the work information management server 300, as appropriate (depending on the form of the presentation information).

Subsequently, the presentation information generation unit 440 generates presentation information based on the information acquired in step S220 (S230). For example, the presentation information illustrated in FIG. 5 or 6 is generated. The information communication unit 410 of the information processing server 400 transmits the generated presentation information to the target terminal 100.

In response to the information communication unit 130 of the target terminal 100 receiving the presentation information, the information presentation unit 140 of the target terminal 100 outputs (displays) the presentation information (S240). As a result, the viewer can view the presentation information.

In an example, the presentation information generated by the presentation information generation unit 440 may be stored in the storage unit 150 of the target terminal 100 or the storage unit 450 of the information processing server 400. In this example, the stored presentation information may be transmitted to the information presentation unit 140 at a timing desired by the user, and the information presentation unit 140 may output the presentation information.

In an example, the processing of step S210 and the subsequent steps or the processing of step S220 and the subsequent steps may be performed after step S130 in FIG. 7. In this example, at any time during the meeting or after the end of the meeting, the presentation information is displayed on the terminal 100 of each participant in the meeting.

As described above, according to the first embodiment, a relationship index indicating the state of interpersonal relations is estimated for users in a team, and presentation information for presenting the relationship index is generated. Accordingly, the users can reference the presentation information to obtain a hint as to how to improve the interpersonal relations. As a result, it is possible to assist in improving interpersonal relations between persons. For example, the state of interpersonal relations within a team can be made close to the ideal state.

In an example, the use of a relationship index more directly indicating the state of interpersonal relations, such as psychological safety, cohesion, or engagement (score), enables the users to reference presentation information more directly indicating the interpersonal relations. As a result, it is possible to more directly assist in improving interpersonal relations between persons.

In an example, feature value influence information is calculated for each user feature value, and presentation information capable of identifying a factor that has affected an estimated relationship index is generated. This facilitates relationship improvement.

In the existing technologies for evaluating the state of communication and evaluating and presenting the relationship between persons involved in the communication, the communication itself can be improved. However, the underlying interpersonal relations between the persons are not taken into consideration, resulting in merely superficial evaluations and improvements. This embodiment estimates a relationship index by also using work information that can be a clue to the underlying interpersonal relations. Thus, the relationship index can be estimated in consideration of the underlying interpersonal relations behind the communication. As a result, it is possible to reduce the likelihood of assisting in making improvements that are superficial so that sufficient effects cannot be achieved.

The interpersonal relations may be evaluated using a questionnaire or the like. However, the questionnaire is a burden on respondents and is difficult to conduct at a high frequency. In addition, responses are subjective and lack objectivity. In this embodiment, a questionnaire is not used, and the above difficulty can be avoided. As a result, users can be relieved from the burden of having to respond to a questionnaire. In addition, the state of interpersonal relations can be evaluated at a high frequency, and the latest state is more likely to be obtained.

Next, a second embodiment will be described. In the second embodiment, differences from the first embodiment will be described. Accordingly, the second embodiment may be similar to the first embodiment unless otherwise specified.

In the first embodiment, a relationship index and information to be used to examine a factor that affects the relationship index are presented as presentation information. In a case where improvements are made based on the presentation information, an appropriate improvement effect is not likely to be obtained because the level of improvements may depend on the individual's ability. In the second embodiment, an example in which a specific improvement method is also proposed will be described.

As described above, it is said that psychological safety can be divided into a plurality of factors (relationship indices), and one of the factors is "ease of speaking up". For convenience of description, the relationship index calculation unit 430 calculates a value indicating the level of ease of speaking up as an example of the relationship index. The level of ease of speaking up is represented as a numerical value, which is hereinafter referred to as an "ease-of-speaking-up index".

In the second embodiment, in step S230 in FIG. 8, the presentation information generation unit 440 generates relationship improvement plan information based on the ease-of-speaking-up index and the feature value influence information calculated by the relationship index calculation unit 430. More specifically, the presentation information generation unit 440 generates relationship improvement plan information in the following procedure.

First, the presentation information generation unit 440 identifies, from within the user feature-value groups, a feature value having a relatively positive influence on the calculation result and a feature value having a relatively negative influence on the calculation result in the process of calculating the ease-of-speaking-up index, based on the feature value influence information generated in the calculation of the ease-of-speaking-up index. For example, the feature value influence information has a positive value for a positive influence and a negative value for a negative influence, and the magnitude of the influence is indicated by an absolute value. In this case, a feature value having a relatively positive influence and a feature value having a relatively negative influence can be identified based on the positive and negative values of the feature value influence information of the feature values and the absolute values.

Subsequently, the presentation information generation unit 440 generates, as relationship improvement plan information, a text representation of a method for maintaining the feature value having a positive influence or a method for improving the feature value having a negative influence.

In an example, the presentation information generation unit 440 may generate relationship improvement plan information including a more specific improvement plan in the form of an image, a voice, a moving image, or the like. The image, voice, and moving image may be created in advance or generated from previous user information. For example, if it is determined that the ease-of-speaking-up index is evaluated to be low strongly due to speaking with less intonation, the presentation information generation unit 440 generates relationship improvement plan information such that a message indicating "Speaking with less intonation seems to affect the ease of speaking up in the team. Pay attention to your intonation when speaking". In addition, the presentation information generation unit 440 adds a voice or a moving image in which an example of speaking with appropriate intonation is recorded to the relationship improvement plan information. The intonation is a feature value that can be calculated based on the amount of change in the prosodic feature value (pitch) over time.

The presentation information generation unit 440 adds relationship improvement plan information to presentation information generated by using a method similar to that in the first embodiment to generate information as presentation information. The presentation information may be stored in the storage unit 150 or the storage unit 450 such that the user can reference, at any time, presentation information related to an improvement plan based on any previous meeting.

During a meeting, the information processing unit 120 calculates some or all of the feature values in the user feature-value group in real time, based on the user information acquired from the information acquisition unit 110, and determines in real time whether an improvement plan indicated by the relationship improvement plan information generated for the previous meeting appropriately is being implemented as defined. In an example, the information processing unit 120 may reference one or more items of relationship improvement plan information generated based on a meeting or meetings further preceding the previous meeting and perform determination on a plurality of improvement plans.

If the information processing unit 120 determines that the improvement plan is not being implemented, the information presentation unit 140 displays, on the terminal 100 in real time, information indicating that the improvement plan is not being implemented.

For example, it is determined that a low tone of voice has a negative influence on the ease of speaking up in the previous meeting, and relationship improvement plan information indicating "raising the tone of voice" is generated as an improvement plan. If the user is still speaking with a low tone of voice in the next meeting, the information presentation unit 140 displays, to the user, information indicating that the improvement plan is not being implemented. The tone of voice is a feature value that can be calculated based on, for example, a prosodic feature value (such as a pitch).

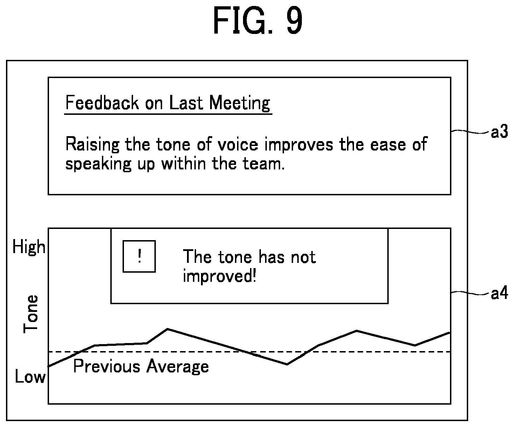

FIG. 9 is a diagram illustrating an example of output information indicating that an improvement plan is not being implemented according to the second embodiment. In FIG. 9, an area a3 includes relationship improvement plan information. An area a4 includes a message indicating that the improvement plan indicated by the relationship improvement plan information is not being implemented during the current meeting. The area a4 further includes a graph depicting a transition of the feature values, which are the target of the relationship improvement plan information, during the meeting.

In an example, the information presentation unit 140 may present (output) the non-implementation of the improvement plan by a sound, vibration, light, or any other suitable method. This makes it more likely that the user will immediately notice the presentation of non-implementation of the improvement plan.

As described above, according to the second embodiment, a specific improvement plan is also presented. Thus, variations in measures taken by users to make improvements are less likely to occur, and further improvements in interpersonal relations within a team can be expected.

Next, a third embodiment will be described. In the third embodiment, differences from the first or second embodiment will be described. Accordingly, the third embodiment may be similar to the first or second embodiment unless otherwise specified.

The first embodiment and the second embodiment relate to existing relationships within a team. In the third embodiment, an example of assisting in reorganizing a team will be described. The selection of a new member to join the team will be described. It is assumed that there is a plurality of candidates as a new member to join the team. According to the third embodiment, a candidate who is most likely to improve relationships within the team can be identified from among the potential candidates to join the team.

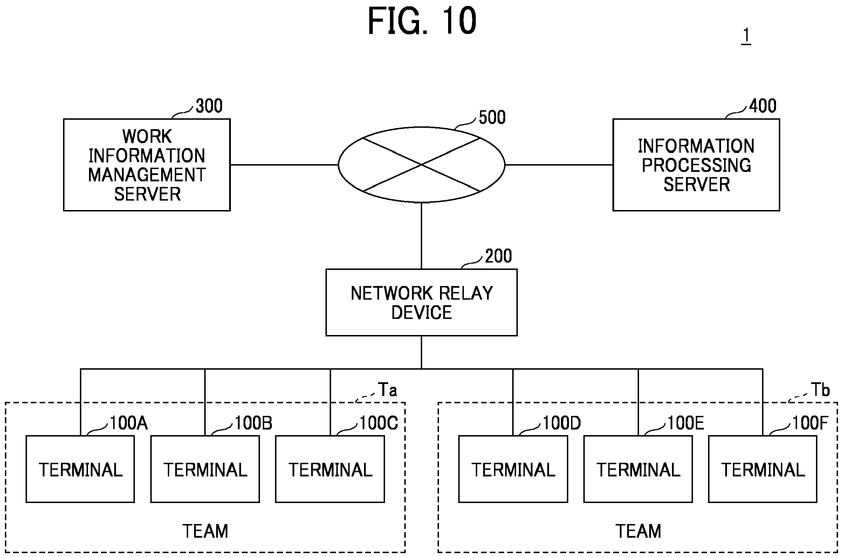

FIG. 10 is a diagram illustrating an example configuration of a relationship improvement support system 1 according to the third embodiment. In FIG. 10, the same components as those in FIG. 1 are denoted by the same reference numerals, and descriptions thereof will be omitted.

In FIG. 10, terminals 100D, 100E, and 100F are used by users who are members belonging to a team Tb, and are connected to the network 500 via the network relay device 200. In an example, the three users belonging to the team Tb are candidates to join the team Ta. This example is for convenience only. In another example, the candidates may belong to a plurality of different teams other than the team Ta.

The number of teams and the numbers of devices are not limited to those illustrated in FIG. 10. The network relay device 200, the work information management server 300, and the information processing server 400 may be independently disposed for each team, and the network relay devices 200, the work information management servers 300, and the information processing servers 400 disposed for the respective teams may be connected to the network 500.

In the third embodiment, the relationship index calculation unit 430 calculates, for each candidate, a relationship index for a set of persons including the candidate and all of the members of the team Ta, based on user feature-value groups of all of the members of the team Ta in a given meeting conducted by the team Ta and a user feature-value group of the candidate in a given meeting conducted by the team Tb. Accordingly, a relationship index can be predicted for each of the candidates if the candidate actually joins the team Ta. The relationship index calculated for each candidate is hereinafter referred to as an "estimated joining-time relationship index".

The estimated joining-time relationship index may be a difference between a relationship index calculated using the user feature-value group of the candidate and a relationship index calculated without using the user feature-value group of the candidate.

In an example, the relationship index calculation unit 430 may calculate one estimated j oining-time relationship index (or a set of estimated j oining-time relationship indices) for a combination of two or more candidates. In other words, the relationship index calculation unit 430 may use user feature-value groups of two or more candidates in calculation of each estimated joining-time relationship index. In this example, the relationship index calculation unit 430 calculates an estimated joining-time relationship index for each of the combinations of all the candidates. For example, two of candidates A, B, and C are to join the team Ta. In this case, the relationship index calculation unit 430 calculates an estimated joining-time relationship index for each of the combinations of the candidates A to C, namely, (A, B), (A, C), and (B, C).

The presentation information generation unit 440 generates presentation information for presenting the estimated j oining-time relationship index calculated by the relationship index calculation unit 430 for each of the candidates (or each of the combinations of the candidates) together with candidate information. The candidate information may include the name of each candidate. The candidate information may further include a team the candidate belongs to, a face image of the candidate, and other work information. The candidate information of a certain candidate can be acquired from the work information stored in the work information management server 300 for the candidate.

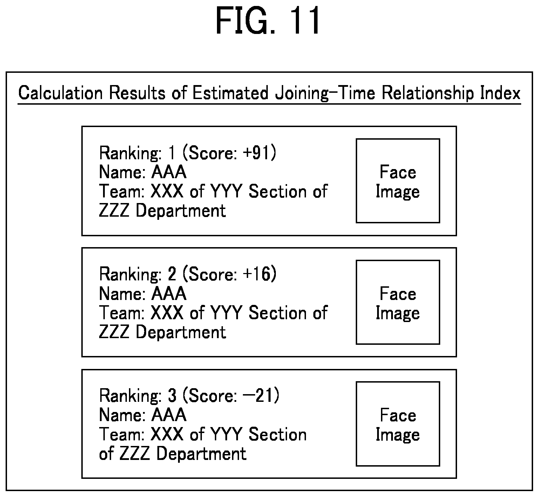

In an example, the presentation information generation unit 440 may generate presentation information such that the candidate information of a candidate (or combination of candidates) having the best estimated joining-time relationship index among the candidates (or combinations of candidates) is highlighted. In another example, as illustrated in FIG. 11, the presentation information generation unit 440 may arrange items of candidate information in ascending or descending order of the estimated j oining-time relationship index and generate presentation information including information on the ranking of the items of candidate information.

As described above, according to the third embodiment, it is possible to assist in reorganizing a team to improve relationships within the team.

In the embodiments described above, the information processing server 400, or the information processing server 400 and each of the terminals 100 are examples of an information processing system and an organization structure support system. The work information management server 300 is an example of a work information storage unit. The image information acquisition unit 111 and the voice information acquisition unit 112 are examples of a user meeting information acquisition unit. The information processing unit 120 is an example of a determination unit. The information presentation unit 140 is an example of an output unit.

While embodiments of the present disclosure have been described in detail, the present disclosure is not limited to such specific embodiments and may be modified or changed in various ways within the scope of the present disclosure as defined by the appended claims.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In an embodiment, an information processing system includes a user meeting information acquisition unit configured to acquire, from a terminal device used by each of a plurality of users, user meeting information indicating a state of a corresponding one of the plurality of users in a meeting in which the plurality of users participate; a work information acquisition unit configured to acquire, from a work information storage unit that stores work information related to a history of work-related activities, the work information of the plurality of users; a relationship index calculation unit configured to calculate a relationship index indicating a relationship between the plurality of users and store the relationship index in a storage unit, the relationship index being calculated based on the user meeting information acquired by the user meeting information acquisition unit and the work information acquired by the work information acquisition unit; and a presentation information generation unit configured to generate, based on the relationship index stored in the storage unit, presentation information for presenting the relationship index to each of the plurality of users, and cause the terminal device to present the presentation information.

In one example, the information processing system further includes a determination unit configured to perform a determination as to whether an improvement according to the improvement plan is being made, based on a feature of a user having a relatively high degree of influence on the relationship index that is calculated after the improvement plan is presented among the plurality of users; and an output unit configured to output a result of the determination.

In one example, the determination unit is configured to perform a determination as to whether an improvement according to the improvement plan is being made during a meeting, and the output unit is configured to output a result of the determination during the meeting.

In one example, the result of the determination is output by means including any one of display, sound, vibration, and light.

In another embodiment, an organization structure support system includes: a user meeting information acquisition unit (111, 112) configured to acquire, from a terminal device used by each of a plurality of users belonging to an organization, user meeting information indicating a state of a corresponding one of the plurality of users in a meeting in which the plurality of users participate, and acquire, from a terminal device used by each of one or more other users who do not belong to the organization, user meeting information indicating a state of a corresponding one of the one or more other users in a meeting in which the one or more other users participate; a work information acquisition unit (113) configured to acquire, from a work information storage unit that stores work information related to a history of work-related activities, the work information of the plurality of users and the work information of the one or more other users; a relationship index calculation unit (430) configured to calculate relationship indices indicating relationships for sets of users, each of the sets of users including the plurality of users and one of the one or more other users, the relationship indices being calculated based on the user meeting information acquired by the user meeting information acquisition unit (111, 112) and the work information acquired by the work information acquisition unit (113); and a presentation information generation unit (440) configured to generate, based on the relationship indices, presentation information for presenting the relationship indices to a user, and cause a terminal device used by the user to present the presentation information.

## Claims

1. An information processing system comprising:
a user meeting information acquisition unit (111, 112) configured to acquire, from a terminal device used by each of a plurality of users, user meeting information indicating a state of a corresponding one of the plurality of users in a meeting in which the plurality of users participate;
a work information acquisition unit (113) configured to acquire work information related to a history of work-related activities of the plurality of users;
a relationship index calculation unit (430) configured to calculate a relationship index indicating a relationship between the plurality of users, based on the acquired user meeting information and the acquired work information, and store the relationship index in a storage unit (450); and
a presentation information generation unit (440) configured to generate, based on the relationship index that is stored, presentation information for presenting the relationship index to each of the plurality of users, and cause the terminal device to present the presentation information.

2. The information processing system according to claim 1, wherein the user meeting information includes at least one of image information of the plurality of users, voice information of the plurality of users, and physiological information of the plurality of users.

3. The information processing system according to claim 1 or 2, wherein the presentation information includes a value of the relationship index or information on a graphical representation of the value.

4. The information processing system according to any one of claims 1 to 3, wherein the presentation information includes information in which relationship indices, each including the relationship index that is calculated at a time, are arranged in a time series.

5. The information processing system according to claim 4, wherein the presentation information includes information on events corresponding to the relationship indices arranged in time series.

6. The information processing system according to any one of claims 1 to 5, wherein the relationship index calculation unit (430) is configured to determine a feature having a degree of influence based on the relationship index, among a plurality of features indicated by user information, the user information including the user meeting information and the work information, and
the presentation information generation unit (440) is configured to generate the presentation information including information related to the feature estimated by the relationship index calculation unit (430).

7. The information processing system according to claim 6, wherein the plurality of features include at least one of a feature of image information included in the user meeting information, a feature of voice information included in the user meeting information, a feature of physiological information included in the user meeting information, and a feature of the work information.

8. The information processing system according to claim 6 or 7, wherein the presentation information generation unit (440) is configured to generate an improvement plan for improving the relationship, based on the feature estimated by the relationship index calculation unit (430), and generate the presentation information including the improvement plan.

9. The information processing system according to claim 8, wherein the presentation information generation unit (440) is configured to generate the presentation information for presentation during the meeting.

10. The information processing system according to claim 8 or 9, further comprising:
a determination unit (120) configured to determine whether an improvement according to the improvement plan is being made, based on a feature having a degree of influence on the relationship index that is higher than a threshold, the feature being calculated after the improvement plan is presented; and
an output unit (140) configured to output a result of the determination.

11. The information processing system according to any one of claims 1 to 10, wherein
the user meeting information acquisition unit (111, 112) is configured to further acquire, from a terminal device used by each of one or more other users other than the plurality of users, user meeting information indicating a state of a corresponding one of the one or more other users in a meeting in which the one or more other users participate,
the work information acquisition unit (113) is configured to further acquire work information of the one or more other users,
the relationship index calculation unit (430) is configured to calculate a relationship index for a set of users including the plurality of users and the one or more other users, based on the user meeting information of the plurality of users, the work information of the plurality of users, the user meeting information of the one or more other users, and the work information of the one or more other users, and
the presentation information generation unit (440) is configured to generate the presentation information based on the relationship index for the set of users.

12. The information processing system according to any one of claims 1 to 10, wherein
the user meeting information acquisition unit (111, 112) is configured to further acquire, from a terminal device used by each of a plurality of other users other than the plurality of users, user meeting information indicating a state of a corresponding one of the plurality of other users in a meeting in which the plurality of other users participate,
the work information acquisition unit (113) is configured to further acquire work information of the plurality of other users,
the relationship index calculation unit (430) is configured to calculate relationship indices for combinations of other users, each of the combinations of other users including some or all of the plurality of other users, each of the relationship indices being calculated based on the user meeting information of the plurality of users, the work information of the plurality of users, the user meeting information of the other users included in a corresponding one of the combinations of other users among of the plurality of other users, and the work information of the other users included in the corresponding one of the combinations of other users, and
the presentation information generation unit (440) is configured to generate the presentation information including information on a ranking of the combinations of other users, based on the relationship indices for the combinations of other users.

13. The information processing system of any one of claims 1 to 12, wherein the plurality of users belongs to a same organization.

14. An information processing method comprising:
acquiring (S 110), from a terminal device used by each of a plurality of users, user meeting information indicating a state of a corresponding one of the plurality of users in a meeting in which the plurality of users participate;
acquiring (S120) work information the work information related to a history of work-related activities of the plurality of users;
calculating (S140, S220) a relationship index indicating a relationship between the plurality of users, based on the acquired user meeting information and the acquired work information;
storing (S140, S220) the relationship index in a storage unit;
generating (S230), based on the relationship index that is stored, presentation information for presenting the relationship index to each of the plurality of users; and
causing (S240) the terminal device to present the presentation information.

15. Carrier means carrying computer readable code for controlling a computer system to carry out the information processing method of claim 14.
